# EUROPEAN PATENT SPECIFICATION

(11) **EP 4 264 251 B1**
(45) Date of publication and mention of the grant of the patent: **29.10.2025**
(21) Application number: 21909677.3
(22) Date of filing: 21.12.2021
(51) Int. Cl.: G01N 29/04, G01N 29/22, G01N 29/24, G01N 29/265, G01N 29/32, G01B 17/02, G01N 29/07

(54) **ULTRASONIC WALL THICKNESS MEASUREMENT SYSTEM HAVING A HIGH TEMPERATURE ULTRASONIC TRANSDUCER FOR MONITORING THE CONDITION OF A STRUCTURAL ASSET**
ULTRASCHALLWANDDICKENMESSSYSTEM MIT EINEM HOCHTEMPERATURULTRASCHALLWANDLER ZUR ÜBERWACHUNG DES ZUSTANDS EINES STRUKTURBESTANDES
SYSTÈME À ULTRASONS DE MESURE D'ÉPAISSEUR DE PAROI AYANT UN TRANSDUCTEUR À ULTRASONS À HAUTE TEMPÉRATURE DESTINÉ À CONTRÔLER LA CONDITION D'UN ACTIF STRUCTUREL

(30) Priority: 21.12.2020 US 202063128205 P
(43) Date of publication of application: 25.10.2023
(73) Proprietor: Molex, LLC, Lisle, IL 60532 (US)
(72) Inventor: WANG, Ke, Lisle, Illinois 60532 (US); ROSCA, Dumitru, Lisle, Illinois 60532 (US); SCHIEKE, Sascha, Lisle, Illinois 60532 (US)
(74) Representative: Ter Meer Steinmeister & Partner
(86) International application number: PCT/IB2021/062123
(87) International publication number: WO 2022/137131

(56) References cited:
- WO-A1-2017/077287
- GB-A- 2 544 108
- JP-A- 2005 354 281
- JP-A- 2005 354 281
- JP-A- 2011 127 989
- US-A- 5 354 956
- US-A- 5 354 956
- US-A1- 2019 360 974
- US-A1- 2019 360 974

## Description

### TECHNICAL FIELD

This disclosure relates to the field of corrosion and erosion monitoring of structural assets, including pipes and pressure vessels. More specifically, this disclosure relates to a high temperature ultrasonic transducer for monitoring the condition of a structural asset.

### DESCRIPTION OF RELATED ART

The use of ultrasonic transducers for ultrasonically monitoring the condition and integrity of structural assets, including pipes and pressure vessels, such as those used in the oil and gas and power generation industries, is well-known.

At present, such ultrasonic transducers have temperature limits (typically required to operate a temperatures below 150° Celsius) which exclude them from being used in a number of demanding applications at elevated temperatures in various industries, e.g., power, process, automotive and aerospace. The primary reason for the temperature limits of known ultrasonic transducers is because known ultrasonic transducers utilize epoxies and/or adhesives.

At present, known ultrasonic transducers also do not support the requirements of the evolving trend of Industry 4.0 and NDE 4.0 for accurate and consistent monitoring. For example, known ultrasonic transducers usually do not include the features for in situ temperature measurement which can be used for either ultrasonic system calibration required by industry standards or for monitoring the temperature distribution across the part to be inspected. The temperature distribution might be useful for process optimization (e.g., fine-tuning of burners). Another typical NDE 4.0 design concept is provided if the transducer is capable of submitting health information to the monitoring software platform. Automatic tracking of the health information will be necessary for mass deployments of transducers to plan field service activities and to confirm the validity of measurements. Processing of transducer health information could take place at the transducer - at the edge - or in the cloud. For edge solutions, the processing hardware will need to be protected from excessive heat which could damage the hardware (ID board).

At present, known ultrasonic transducers also have complicated assembly processes.

As a result of the foregoing, certain individuals would appreciate improvements in ultrasonic transducers for monitoring the condition of structural assets.

US 2019/360974 A1 discloses a sensor for ultrasonically measuring a portion of a structure having a temperature significantly above room-temperature. The sensor comprises a high-temperature portion for intimate contact with the structure, the high-temperature portion comprising at least: at least one transducer for converting a first signal to an ultrasonic transmit signal, and for converting an ultrasonic reflected signal to a second signal; a low-temperature portion comprising at least: at least one digital sensor interface (DSI) to which the transducer is electrically connected, the DSI being configured to transmit the first electrical signal and receive the second electrical signal, and to generate an A-scan signal based on the first and second electrical signals; a wireless interface for transmitting a digital signal based directly or indirectly on at least said A-scan signal; and a battery for powering the DSI and the wireless interface; and an elongated member containing one or more electrical conductors for conducting the first and second signals between the transducer and the DSI, the elongated member being configured to offset the low-temperature portion a sufficient distance away from the high-temperature portion such that the low-temperature portion is subjected to significantly less heat from the structure compared to the high-temperature portion.

JP 2005 354281 A discloses an ultrasonic probe. The ultrasonic probe for high temperature comprises a conductive pedestal having a detection inner surface in contact with a non-measurement surface and a detection inner surface in parallel with the detection outer surface; a flat piezoelectric element adhering to the detection inner surface via a first heat-resistant soft metal; a flat pressurization member for pressurizing the piezoelectric element toward the detection inner surface via a second heat-resistant soft metal; a heat-resistant energization member for energizing the pressurization member toward the detection inner surface; and a reaction receiving member that is made of an insulating material, comes into contact with a heat-resistant energization member, and receives the reaction of energization force. The piezoelectric element, the measurement inner surface, and the pressurization member are adhered by the deformation of the first heat-resistant soft metal and the second heat-resistant soft metal, and voltage is applied between the pedestal and the pressurization member or voltage is measured.

US 5 354 956 A discloses a pulse echo apparatus and methods for measuring characteristics of a borehole while it is being drilled. A component of a bottomhole assembly, preferably a drilling collar, is provided with one or more ultra-sonic transceivers. A pulse echo sensor of the transceiver is preferably placed in a stabilizer fin of the collar, but may also be placed in the wall of the collar, preferably close to a stabilizing fin. Electronic processing and control circuitry for the pulse-echo sensor is provided in an electronic module placed within such collar. Such pulse echo apparatus, which preferably includes two diametrically opposed transceivers, generates signals from which standoff from a borehole wall may be determined. A method and apparatus are provided for measuring standoff and borehole diameter in the presence of drilling cuttings entrained in the drilling fluid. In a preferred embodiment, such signals are assessed by the electronic processing and control circuitry to determine if gas has entered borehole. Three methods and apparatus are provided for such gas entry determination. The first relies on measurement of sonic impedance of the drilling fluid by assessing the amplitude of an echo from an interface between the drilling fluid and a delay-line placed outwardly of a ceramic sensor. The second relies on measurement of drilling fluid attenuation of a borehole wall echo. The third relies on measurement of the phase of oscillations of echoes to identify large gas bubble entries. The pulse-echo sensor includes a sensor stack including a backing element, a piezo-electric ceramic disk, and a delay-line.

GB 2 544 108 A discloses an ultrasonic thickness gauge for measuring the thickness of a hot substrate and being permanently installed thereto. The gauge comprising: a transducer, with a piezoelectric element for transmitting and receiving pulses of ultrasonic vibrations; a delay line having a first surface attached to the piezoelectric element and a second surface configured to be attached to the substrate; wherein the delay line has a coefficient of thermal expansion (CTE) at 200°C from 4 x 10-6 /°C to 11 x 10-6 /°C, preferably from 5 x 10-6 /°C to 11 x 10-6 /°C, more preferably from 6 x 10-6 /°C to 10 x 10-6 /°C (measured by ASTEM E289-04). The substrate can be a pipeline, tank or vessel, operated at a maximum temperate TMax, the second surface can be adhered to the substrate by an adhesive layer of thermosetting adhesive with a glass transition temperature which is greater than Tmax. The delay line can comprises ceramic, glass, mixtures thereof, preferably borosilicate glass, flurophlogopite mica or mixtures. The gauge may include a wireless transceiver to transmit and receive data over a Wireless network.

### SUMMARY

In some embodiments, an ultrasonic transducer for high temperature application forms part of ultrasonic wall thickness measurement system. The ultrasonic transducer has a modular design which enables the selection of piezoelectric element type based on field applications without changing the manufacturing process and redesigning of other components. A temperature sensor can be provided as part of the ultrasonic transducer.

Methods of assembly are also provided.

In an embodiment, an ultrasonic transducer for high temperature application includes a first modular assembly including a first foil, a piezoelectric element, a second foil, a backing, and an electrode provided in a stacked configuration, and a second modular assembly including a delay and a coupling member rotatably coupled to an upper end of the delay. The first modular assembly is configured to be positioned within an opening of the delay and the coupling member is configured to be rotated into engagement with an upper end of the first modular assembly to secure the first and second modular assemblies together. In a first configuration of the first modular assembly, a first piezoelectric element is provided which is configured to operate at a temperature exceeding 150° Celsius is provided, and in a second configuration of the first modular assembly, a second piezoelectric element is provided which is configured to operate at a temperature exceeding 150° Celsius. The first and second piezoelectric elements are configured to operate at different temperatures.

In an embodiment, an ultrasonic transducer for high temperature application includes an assembly including a first foil, a piezoelectric element, a second foil, a backing, and an electrode provided in a stacked configuration. The ultrasonic transducer further includes a delay, and a coupling member coupled to an upper end of the delay. The assembly is configured to be positioned within the opening of the delay and the coupling member is configured to be moved into engagement with an upper end of the assembly to secure the assembly to the delay. The ultrasonic transducer further includes a ring rotatably coupled to a lower end of the delay, and a third foil coupled to the ring. A resistance temperature detector is mounted in the delay and is in contact with the third foil.

In an embodiment, a method of assembling an ultrasonic transducer is provided. The method includes stacking a first foil, a piezoelectric element, a second foil, a backing, and an electrode into a stacked configuration to form a modular assembly; inserting the modular assembly into a delay; engaging a coupling member with an upper end of the delay; and rotating the coupling member to engage the coupling member with an upper end of the modular assembly.

In an embodiment, a method is provided. The method includes stacking a first foil, a piezoelectric element, a second foil, a backing, and an electrode into a stacked configuration to form a first assembly; inserting the first assembly into a delay; engaging a coupling member with an upper end of the delay; rotating the coupling member to engage the coupling member with an upper end of the first assembly; inserting the coupled first assembly, delay and coupling member into a housing; electrically coupling a cable assembly to the electrode and to the delay; seating a cap on an open end of the housing; inserting the delay into an upper housing of a mounting assembly; attaching a ring supporting a foil to a lower end of the delay below the upper housing of the mounting assembly to form a second assembly; inserting the second assembly into a lower housing of the mounting assembly; engaging coupling members with the upper and lower housings of the mounting assembly; and activating the coupling members to move the upper housing of the mounting assembly and the second assembly relative to the lower housing of the mounting assembly.

### BRIEF DESCRIPTION OF THE DRAWINGS

The present disclosure is illustrated by way of example and not limited in the accompanying figures in which like reference numerals indicate similar elements and in which:
FIG. 1 depicts a perspective view of an ultrasonic wall thickness measurement system according to a first embodiment shown on a structural asset;
FIG. 2 depicts a side elevation view of the ultrasonic wall thickness measurement system shown on the structural asset;
FIG. 3 depicts a perspective view of the ultrasonic wall thickness measurement system shown on the structural asset which is partially shown;
FIG. 4 depicts a cross-sectional perspective view of an ultrasonic wall thickness measurement shown on the structural asset which is partially shown;
FIG. 5 depicts an exploded, side elevation view of an ultrasonic transducer according to the first embodiment of the ultrasonic wall thickness measurement system;
FIG. 6 depicts a perspective view of a delay of the ultrasonic transducer;
FIGS. 7 and 8 depict side elevation views of the delay;
FIG. 9 depicts a cross-sectional view of the delay;
FIG. 10 depicts a perspective view of an electrode of the ultrasonic transducer;
FIG. 11 depicts a perspective view of a third foil of the ultrasonic transducer;
FIG. 12 depicts a side elevation view of an ultrasonic transducer according to a second embodiment; and
FIG. 13 depicts a cross-sectional view of an ultrasonic transducer according to a third embodiment.

### DETAILED DESCRIPTION

While the disclosure may be susceptible to embodiment in different forms, there is shown in the drawings, and herein will be described in detail, specific embodiments with the understanding that the present disclosure is to be considered an exemplification of the principles of the disclosure, and is not intended to limit the disclosure to that as illustrated and described herein. Therefore, unless otherwise noted, features disclosed herein may be combined to form additional combinations that were not otherwise shown for purposes of brevity. It will be further appreciated that in some embodiments, one or more elements illustrated by way of example in a drawing(s) may be eliminated and/or substituted with alternative elements within the scope of the disclosure.

An ultrasonic wall thickness measurement system 20 is provided herein. Certain features of the ultrasonic wall thickness measurement system 20 may be described and/or illustrated in applications owned by Applicant, namely: International (PCT) Application No. PCT/US2019/052526, filed on September 24, 2019, published as US2021/0348919, and entitled "A System for Monitoring a Thickness of One or More Assets Using an Ultrasonic Measurement System, a Multiplexer Switch Module and a Two-Conductor Connection, and a Method of Performing the Same"; International (PCT) Application No. PCT/US2019/023613, filed on March 22, 2019, published as US2021/0096105, and entitled "System and Method of Submitting Data From Individual Sensors Over a Shared Cable;" and United States Provisional Application No. 62/982,751, filed on February 28, 2020, filed as PCT/IB2021/051697 on March 1, 2021, published on September 2, 2021 (WO/2021/171273), and entitled "System and Method for Corrosion and Erosion Monitoring of Pipes and Vessels." Each of the foregoing applications are incorporated herein by reference in their entireties.

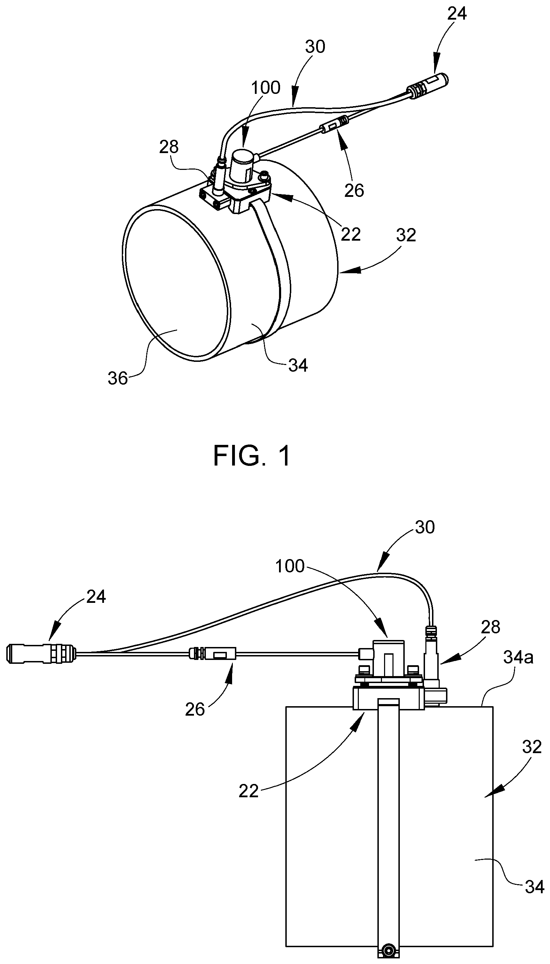

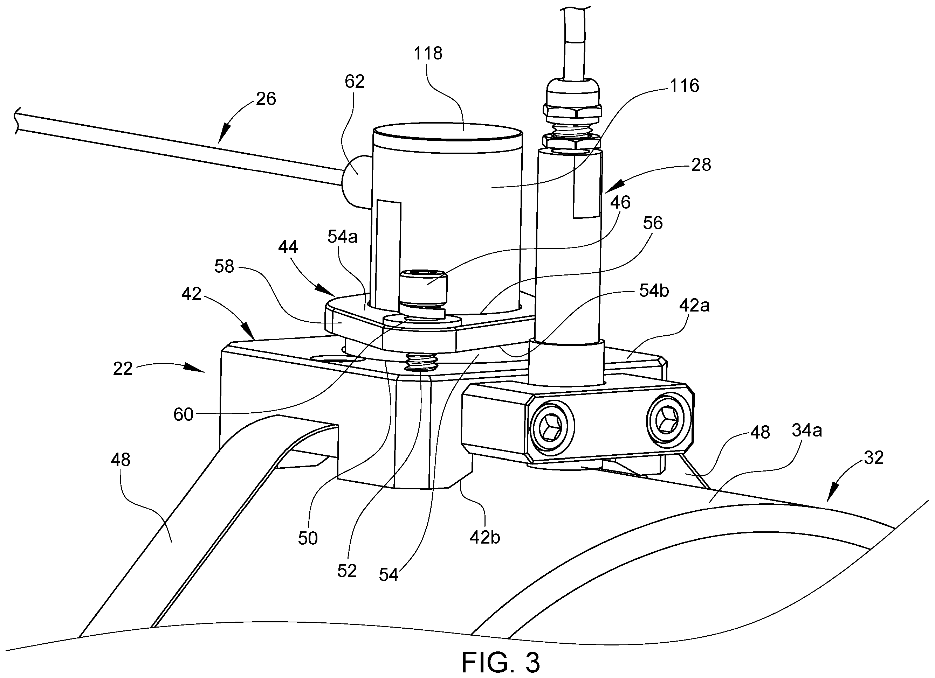

As best illustrated in FIGS. 1-3, the ultrasonic wall thickness measurement system 20 includes a mounting assembly 22, an ID board assembly 24, a first cable assembly 26, a temperature sensor 28, for example a resistance temperature detector ("RTD"), a second cable assembly 30, and an ultrasonic transducer 100. The ultrasonic wall thickness measurement system 20 is intended to operate to monitor/measure a condition or thickness of a structural asset 32, such as a pipe or pressure vessel. The structural asset 32 has a cylindrical wall 34 having a thickness, and a central passageway 36 therethrough.

The mounting assembly 22 mounts and secures the ultrasonic transducer 100 and the temperature sensor 28 to the structural asset 32. Further description relating to the mounting assembly 22 will be provided in further detail hereinbelow.

The ID board assembly 24 is connected to the ultrasonic transducer 100 via the first cable assembly 26.

In an embodiment, the temperature sensor 28 is positioned proximate to the ultrasonic transducer 100 and is mounted to the mounting assembly 22. The temperature sensor 28 is connected to the ID board assembly 24 via the second cable assembly 30.

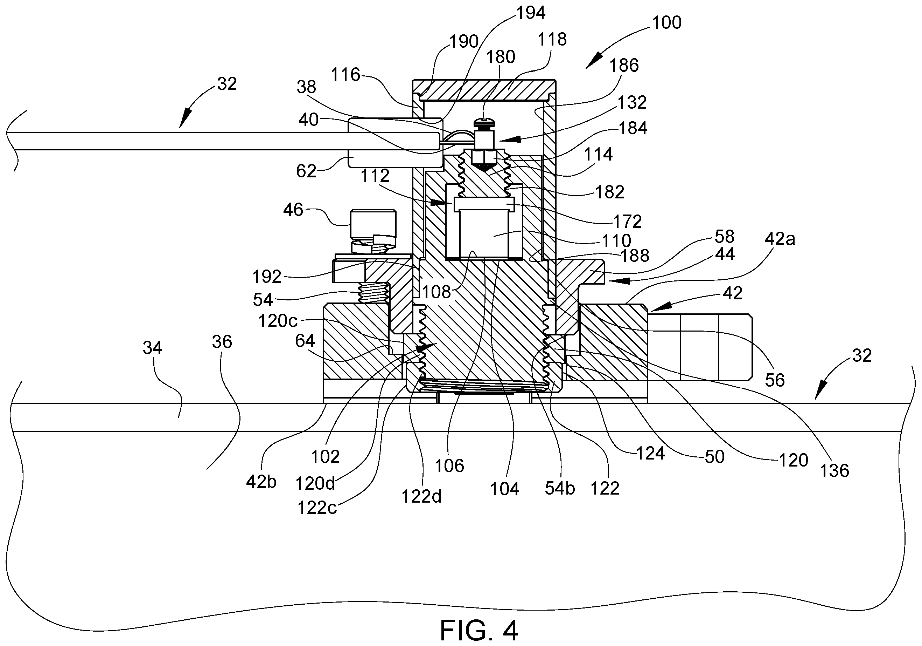

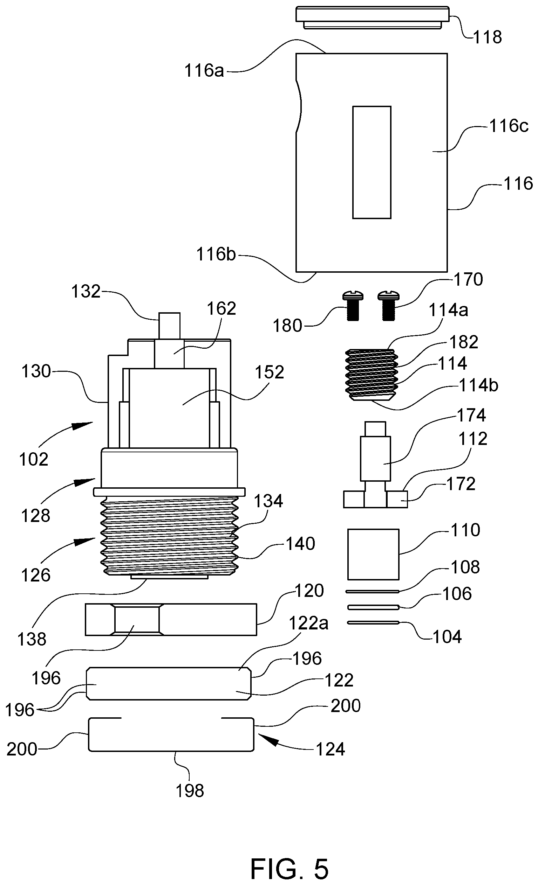

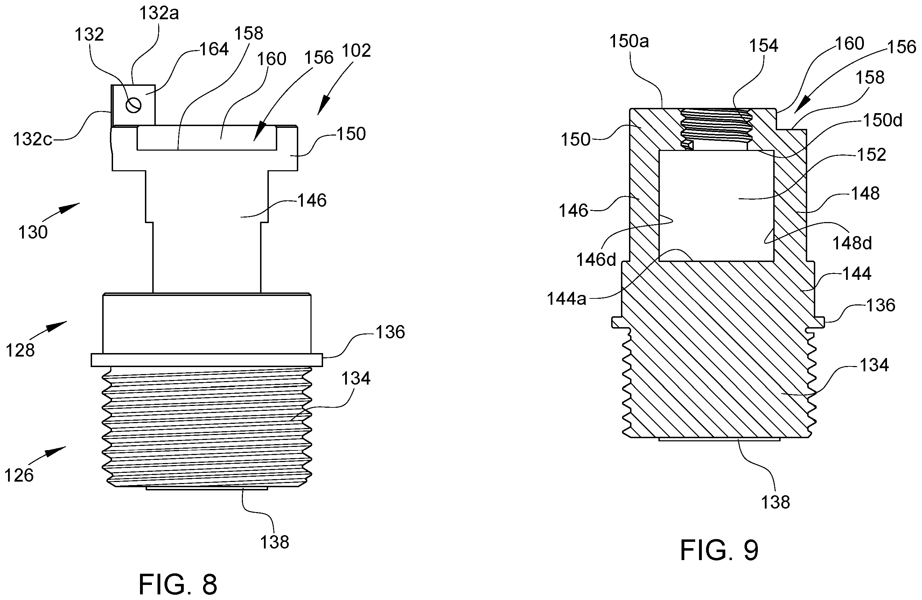

The ultrasonic transducer 100 is illustrated in FIGS. 4-11. The ultrasonic transducer 100 is configured to operate at temperatures exceeding 150° Celsius (e.g., 350° Celsius, 650° Celsius, and above). The ultrasonic transducer 100 includes a delay 102, a first foil 104, a piezoelectric element 106, a second foil 108, a backing 110, an electrode 112, a coupling member 114, a housing 116, a cap 118, an upper ring 120, a lower ring 122, and a third foil 124.

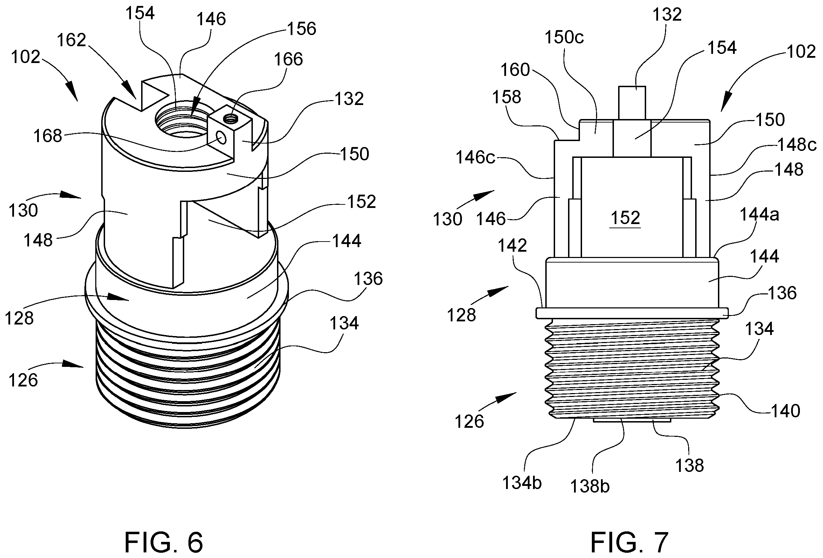

The delay 102 is best illustrated in FIGS. 6-9 and is preferably formed of a durable and non-corrosive material, such as, for instance, stainless steel. The delay 102 has first, second, third and fourth portions 126, 128, 130, 132, each of which are integrally formed.

The first portion 126 has a body 134 having a cylindrical flange 136 extending outwardly therefrom at an upper end thereof. A lower end 134b of the body 134 is preferably planar in configuration, but preferably has a stepped portion 138 at a center thereof. The stepped portion 138 preferably slightly extends downwardly from the lower end 134b of the body 134. The stepped portion 138 has a planar lower end 138b that is parallel to the lower end 134b. The stepped portion 138 will boost the transmission from the ultrasonic transducer 100 to the structural asset 32 (as is known in the art). The portion of the outer surface of the body 134 below the flange 136 is preferably cylindrical in configuration and has a thread 140 thereon. The cylindrical flange 136 defines a planar upper surface 142.

The second portion 128 of the delay 102 extends upwardly from the first portion 126. The second portion 128 is formed from a body 144 having an upper end 144a which is configured to support other portions of the ultrasonic transducer 100, as will be explained in further detail hereinbelow. The body 144 is preferably cylindrical in configuration and is generally commensurate in diameter with the outer cylindrical thread 140 of the first portion 126. The cylindrical flange 136 is provided where the second portion 128 is joined to the first portion 126. The upper end 144a is preferably planar in configuration and is preferably parallel to the lower end 134b.

The third portion 130 of the delay 102 has a pair of opposing walls 146, 148 extending upward from the upper end 144a of the body 144, and a body 150 at upper ends of the walls 146, 148. The upper end 144a of the body 144, inner surfaces 146d, 148d of the walls 146, 148 and a lower end 150b of the body 150 define an opening 154.

The body 150 has a cylindrical outer surface 150c and has a central threaded passageway 156 extending from an upper end 150a thereof to the lower end 150b. The passageway 156 is in communication with the opening 154. The outer surface 150c is interrupted by a first notch 158 formed of a planar horizontal wall surface 160 that extends inward from the outer surface 150c and a vertical wall surface 162 that extends from the upper end 150a to the horizontal wall surface 160. A second notch 164 interrupts the cylindrical outer surface portion 150c and extends from the upper end 150a to the lower end 150b, and is communication with the opening 154. As such, the second notch 164 is provided between the opposing walls 146, 148. The diameter of the cylindrical outer surface 150c may have a diameter that is slightly smaller than the diameter of the body 134 of the second portion 128. The upper end 150a and the lower end 150b are preferably planar in configuration, and are preferably parallel to each other and to the lower end 134b of the first portion 126 and the upper end 144a of the second portion 128.

Outer surfaces 146c, 148c of the walls 146, 148 are arcuate in configuration and are generally flush with the outer surface 150c of the body 150. The outer surfaces 146c, 148c may be spaced inward from the outer surface of the body 144. Inner surfaces 146b, 148b of the walls 146, 148 are planar.

The fourth portion 132 of the delay 102 is formed as a block-like body generally resembling a square or rectangular prism that extends upwardly from the upper end 150a of the body 150. The fourth portion 132 is positioned diametrically opposite to the location of the notch 158. The fourth portion 132 has an upper end 132a which is preferably planar and which is preferably parallel to the upper end 150a of the third portion 130, and an outer wall 164c of the fourth portion 132 is preferably arcuate and flush with the outer surface 150c of the body 150. The fourth portion 132 has a recess 166 extending from a planar upper end 132a thereof, and a transverse bore 168 extending therethrough which is in communication with the recess 166. The recess 166 receives a fastening element 170, such as a screw, and the bore 168 receives a wire 38 of the first cable assembly 26.

The first foil 104, the piezoelectric element 106, the second foil 108, the backing 110 and the electrode 112 are positioned in a stacked configuration within the opening 154 of the third portion 130 of the delay 102. The electrode 112 further extends into the notch 164 of the third portion 130 of the delay 102.

A lower surface of the first foil 104 is positioned on the upper end 144a of the body 144 of second portion 128 of the delay 102. A lower surface of the piezoelectric element 106 is positioned on an upper surface of the first foil 104. A lower surface of the second foil 108 is positioned on an upper surface of the piezoelectric element 106. A lower surface of the backing 110 is positioned on an upper surface of the second foil 108. A lower surface of the electrode 112 is positioned on an upper surface of the backing 110.

The first and second foils 104, 108 may be formed of any suitable material as long as the first foil 104 meets the following requirements: (1) the material must be rated to withstand the desired temperature limits of the ultrasonic transducer 100, namely temperatures exceeding 150° Celsius (e.g., 350° Celsius, 650° Celsius, and above); (2) the material must be a soft metal that is capable of absorbing any roughness; and (3) the material must be conductive. In a preferred embodiment, the first and second foils 104 are formed of silver, but in various applications the foils 104, 108 may alternatively be formed of gold, copper, or any other suitable material. In most instances the first and second foils 104, 108 are preferably formed of the same material, however, it is to be understood that the first foil 104 may be formed of a first material and the second foil 108 may be formed of a second, different material.

The piezoelectric element 106 may be formed of any suitable material dependent on the desired temperature limits of the ultrasonic transducer 100. For example, in an application intended to have a temperature limit of 350° Celsius, the piezoelectric element 106 is preferably formed of TRS BT194, and, in an application intended to have a temperature limit of 650° Celsius, the piezoelectric element 106 is preferably formed of bismuth titanate or lithium niobate.

The backing 110 may be formed of any suitable material dependent on the desired temperature limits of the ultrasonic transducer 100. In a preferred embodiment, the backing 110 is preferably formed of metal oxide.

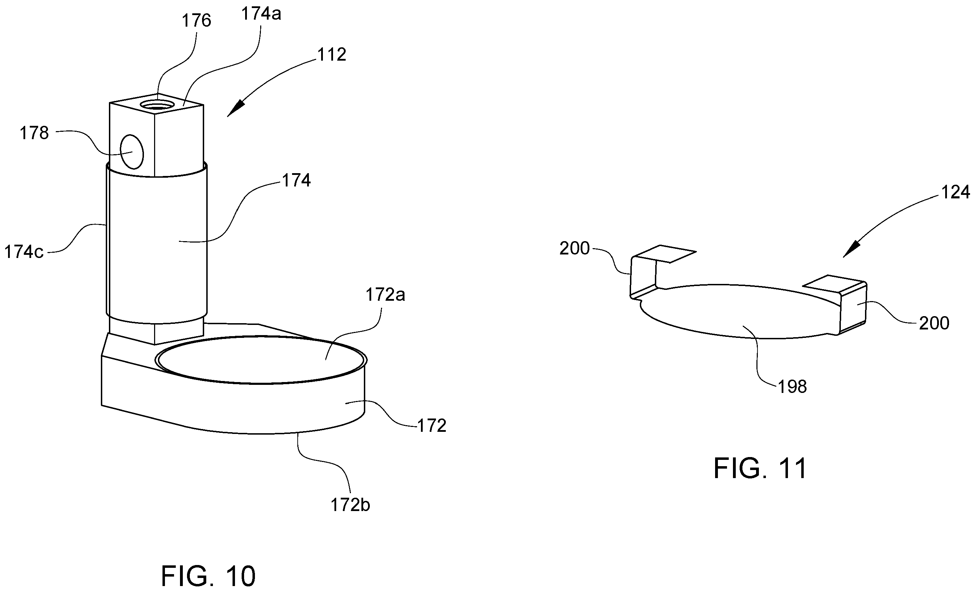

As shown in FIG. 10, the electrode 112 has a base portion 172 and an upstanding portion 174 which are preferably integrally formed. The electrode 112 is preferably formed of stainless steel. The base portion 172 has an upper end 172a and a lower end 172b which are each preferably planar and parallel to each other. The base portion 172 is positioned within the opening 154 and the lower end 172b is positioned on the upper surface of the backing 110. The upstanding portion 174 extends upwardly from the upper end 172a of the base portion 172 proximate to an end thereof, such that the upstanding portion 174 extends into and through the notch 164. An outer surface portion 174c of the upstanding portion 174 is cylindrical and seats is flush with the outer cylindrical wall 148c of the wall 148 of the third portion 130. The upstanding portion 174 has a recess 176 extending from a planar upper end 174a thereof, and a transverse bore 178 extending therethrough which is in communication with the recess 166. An upper portion of the upstanding portion 174 aligns with the fourth portion 132 of the fourth portion 132 of the delay 102 and the bores 168, 178 are parallel to each other. The recess 176 receives a fastening element 180, such as a screw, and the bore 178 receives a wire 40 of the first cable assembly 26.

The coupling member 114 has opposite upper and lower ends 114a, 114b which are preferably planar in configuration. The coupling member 114 has a preferably cylindrical body in configuration and has an outer cylindrical thread 182. An engagement 184, such as a recess, is provided at the upper end 114a which is configured to allow for the coupling member 114 to be rotated by an appropriate tool. The coupling member 114 is sized to be positioned within the passageway 156 of the third portion 130 of the delay 102, and the thread 182 is configured to be threadedly engaged with the inner wall defining the passageway 156. If desired, a suitable thread locker may be utilized, but the thread locker should be rated to withstand the desired temperature limits of the ultrasonic transducer 100. In an embodiment, the coupling member 114 is a compression nut.

When each of the first foil 104, the piezoelectric element 106, the second foil 108, the backing 110, and the electrode 112 are in position as described above, the coupling member 114 can be rotated downwardly such that the lower end 114b thereof contacts the upper end 172a of the base portion 172 of the electrode 112, thereby securing each of the first foil 104, the piezoelectric element 106, the second foil 108, the backing 110, and the electrode 112 in place relative to the delay 102 and the coupling member 114. Conventional method of mounting a piezoelectric element include soldering leads on the piezoelectric element, backing preparation, and the like, however, with the present assembly, only the desired piezoelectric element 106 needs to be chosen and installed. The adjustable position coupling member 114 provides for the easy installation of different piezoelectric elements 106 without the need for conventional preparations. For example, a first piezoelectric element 106 can be accommodated, and a second piezoelectric element can be accommodated, while the remainder of the components of the assembly stay the same. This provides a manufacturing advantage because fewer parts are required while providing an ultrasonic transducer 100 that accommodate a variety of piezoelectric element 106 with different temperature limits (for example 350° Celsius, and 650° Celsius).

The housing 116 is generally an elongated tube and is preferably formed of stainless steel. The housing 116 has an upper end 116a and an opposite lower end 116b, an outer generally cylindrical surface 116c, and a passageway 186 which extends through the housing 116 from the upper end 116a to the lower end 116b. The passageway 186 is defined by an inner generally cylindrical surface 188, an upper cylindrical recess 190 extending from the upper end 116b to the cylindrical surface 188, and a lower cylindrical recess 192 extending from the lower end 116a to the cylindrical surface 188. The upper cylindrical recess 190 has a diameter which is greater than cylindrical surface 188 and forms a lower shoulder at a lower end thereof. The lower cylindrical recess 192 has a diameter which is greater than cylindrical surface 188 and forms an upper shoulder at an upper end thereof. The housing 116 further has an aperture 194 which extends through the outer surface 116c to the passageway 186 which allows for the connection of the first cable assembly 26 to the housing 116.

The second, third and fourth portions 128, 130, 132 of the delay 102 are provided within the housing 116. The lower end 116a of the housing 116 is configured to be positioned on the upper surface 136a of the cylindrical flange 136 of the delay 102; and the upper shoulder formed by the lower recess 192 is configured to be positioned on the upper end 144a of the body 144 of second portion 128 of the delay 102. As such, the first portion 126 of the delay 102 closes off a lower end of the passageway 186 of the housing 116 and the second, third and fourth portions 128, 130, 132 of the delay 102, the first and second foils 104, 108, the piezoelectric element 106, the backing 110, the electrode 112 and the coupling member 114 are all positioned within the passageway 186 of the housing 116.

The cap 118 is preferably formed of the same material as the housing 116. The cap 118 is generally cylindrical in configuration and has a lower end 118b. The lower end 118b is configured to be positioned on the lower shoulder formed by the upper recess 190 of the housing 116, thereby closing off an upper end of the passageway 186 of the housing 116.

The upper and lower rings 120, 122 are preferably formed of stainless steel. Each ring 120, 122 has an inner wall 120d, 122d which is threaded and which is configured to rotationally engage with the thread 140 of the body 134 of the first portion 126 of the delay 102. The rings 120, 122 each have an outer cylindrical wall 122d, 120d having a pair of flats 196 thereon for engagement by an appropriate tool. The outer dimension of the upper ring 120 is greater than the outer diameter of the flange 136.

The third foil 124, as best illustrated in FIG. 11, has a bottom base wall 198 and a pair of L-shaped arms 200 extending upward from the base wall 198. The base wall 198 is configured to cover or close off the inner wall 122d of the lower ring 122, and the L-shaped arms 200 extend around both of the flat portions 226 and are positioned to rest on an upper surface 122a of the lower ring 122.

The upper ring 120 is threadedly engaged with the thread 140 of the body 134 of the first portion 126. Then the lower ring 122, having the third foil 124 attached thereto, is threadedly engaged with the thread 140 of the body 134 below the upper ring 120 and such that a lower end of the lower ring 122 aligns with the lower end 134b of the body 134. The upper ring 120 is then be rotated downwardly to engage against the L-shaped arms 200 of the third foil 124 in order to secure the third foil 124 in place between the upper and lower rings 120, 122. Should the third foil 124 ever become damaged or need to be replaced for any reason, the upper ring 120 can be rotated upwardly to allow for the third foil 124 to be removed from the lower ring 122 and replaced. Like the first and second foils 104, 108, the third foil 124 may be formed of any suitable material as long as the third foil 124 meets the following requirements: (1) the material must be rated to withstand the desired temperature limits of the ultrasonic transducer 100, namely temperatures exceeding 150° Celsius (e.g., 350° Celsius, 650° Celsius, and above); (2) the material must be a soft metal that is capable of absorbing any roughness; and (3) efficient in acoustic energy transmission. In a preferred embodiment, the third foil 124 is formed of silver, but in various applications the third foil 124 may alternatively be formed of gold, copper, lead, or any other suitable material.

A method of assembling the ultrasonic wall thickness measurement system 20 is provided. In a first step of the assembly method, the first cable assembly 26 is positioned relative to the ultrasonic transducer 100. More specifically, the first cable assembly 26 is positioned within the aperture 194 of the housing 116 of the ultrasonic transducer 100. A bushing 62 seats in the first notch 158 and the horizontal wall surface 160 provides a support for the bushing 62.

In a second step of the assembly method, the first wire 38 of the first cable assembly 26 is secured to the delay 102 and the second wire 40 of the first cable assembly 26 and is secured to the electrode 112, thereby establishing a connection from the first cable assembly 26 to the delay 102 and to the electrode 112. The first wire 38 of the first cable assembly 26 is inserted into the bore 178 of the delay 102, and the fastening element 170 is rotated to secure the first wire 38 to the delay 102. The second wire 40 of the first cable assembly 26 is inserted into the bore 178 of the electrode 112, and the fastening element 180 is attached to secure the second wire 40 to the electrode 112. The specific order of securing the wires is not important.

In a third step of the assembly method, the cap 118 is secured to the housing 116, the housing 116 is secured to the delay 102, and the first cable assembly 26 is secured to the housing 116. Each securement in this third step may be performed in any suitable manner, but is preferably performed by welding, such as Tungsten inert gas (TIG) welding, laser spot welding, or electron beam welding (the specific order of which is not important). The laser spot welding seals any gaps between the parts to create an isolated space (defined by the passageway 186 of the housing 116) to protect the piezoelectric element 106 from the environment. Of course, other suitable securement methods may also be utilized so long as the piezoelectric element 106 can be protected.

If desired, the isolated space may be filled with a coolant (not shown), e.g., mineral oil, in order to cool the piezoelectric element 106 during operation and to improve its performance at elevated temperatures. In such an instance, it would be preferable to secure the housing 116 to the delay 102 prior to adding the coolant and, once the coolant is added, then securing the cap 118 to the housing 116 and securing the first cable assembly 26 to the housing 116 (although the latter could also be performed prior to the coolant being added if desired).

In a fourth step of the assembly method, the first cable assembly 26 is connected to the ID board assembly 24 and the second cable assembly 30 connects the temperature sensor 28 to the ID board assembly 24.

Once assembled, as described above, the ultrasonic wall thickness measurement system 20, having the desired piezoelectric element 106, may be shipped to allow for installation/mounting at a desired location. It is to be understood that when shipping, the third foil 124 would preferably be separated from the ultrasonic transducer 100 and one or both of the upper and lower rings 120, 122 may also be separated from the ultrasonic transducer 100 or may be threadedly engaged with the delay 102.

The stacked first foil 104, piezoelectric element 106, second foil 108, backing 110 and electrode 112 form a modular assembly. The delay 102 and the coupling member 114 form a modular assembly, and the first modular assembly can be assembled with the second modular assembly. The housing 116, the cap 118 form a modular assembly. The rings 120, 122 and third foil 124 form a modular assembly. Because of the modular design, the ultrasonic transducer 20 enables the selection of piezoelectric element type based on field applications without changing the manufacturing process and redesigning of other components.

A method of mounting the ultrasonic wall thickness measurement system 20 to the structural asset 32 is provided. In this method, the upper and lower rings 120, 122 and third foil 124 are initially not provided on the delay 102.

In the embodiment disclosed herein, the mounting assembly 22 includes a lower housing 42, an upper housing 44 coupled to the lower housing 42 by a plurality of coupling members 46, and a strap 48 (or multiple straps) coupled to the lower housing 42. The lower housing 42 has a central opening 50 which extends from a top surface 42a thereof to a bottom surface 42b thereof. At least a portion of the bottom surface 42b is shaped to conform to an outer surface 34a of the wall 34 of the structural asset 32. The lower housing 42 has a plurality of threaded openings 52 extending from the top surface 42a. The upper housing 44 has a cylindrical body 54 having a central passageway 56 which extends from a top surface 54a thereof to a bottom surface 54b thereof. A flange 58 extends outward from the body 54 proximate to the top surface 54a. The flange 58 has a plurality of threaded passageways 60 therethrough which align with the threaded openings 52 in the lower housing 42. The coupling members 46 may be fasteners, such as screws.

In a first step of the mounting method, the ultrasonic transducer 100, without the fourth modular assembly of the rings 120, 122 and third foil 124, is positioned within the central passageway 56 of the upper housing 44.

In a second step of the mounting method, the upper and lower rings 120, 122 and the third foil 124 are attached to the body 134 as described hereinabove. The upper ring 120 contacts the bottom surface 54b of the body 54 of the upper housing 44.

In a third step of the mounting method, the ultrasonic transducer 100 having the rings 120, 122 and the third foil 124 attached and the upper housing 44 mounted thereon, is inserted into the central passageway 50 of the lower housing 42.

In a fourth step of the mounting method, the coupling members 46 are passed through the aligned passageways 60 and openings 52 and are used to couple the upper housing 44 to the lower housing 42 in such a position that the stepped portion 138 does not extend past the bottom surface 42b of the lower housing 42.

In a fifth step of the mounting method, the lower housing 42 is secured in place to the structural asset 32 using the strap(s) 48.

In a sixth step of the mounting method, the coupling members 46 are actuated to cause the upper housing 44 and the ultrasonic transducer 100 to move down toward the outer surface 34a of the structural asset 32 until the third foil 124 covering the stepped portion 138 comes into contact with the outer surface 34a of the structural asset 32. This may cause compression to ensure that the third foil 124 contacts the structural asset 32. Engagement of the flange 58 with the top surface 42a of the lower housing 42 prevents further downward movement. In addition, the central passageway 50 of the lower housing 42 may have a shoulder 64 which can engage with the bottom surface 54b of the body 54 of the upper housing 44 to prevents further downward movement.

In a seventh step of the mounting method, the temperature sensor 28 is secured to the lower housing 42 such that an end of the temperature sensor 28 contacts the structural asset 32 in close proximity to where the ultrasonic transducer 100 contacts the structural asset 32.

In an alternate embodiment, the fifth step is performed prior to any of the first through fourth steps.

The ultrasonic wall thickness measurement system 20, including the ultrasonic transducer 100, thus provides numerous benefits as compared to prior systems/transducers. More specifically, the ultrasonic wall thickness measurement system 20/ultrasonic transducer 100 provides a compact and modular design (without the use of adhesives or epoxies) such that the ultrasonic wall thickness measurement system 20/ultrasonic transducer 100 can be used in different high temperature environments based on the selection of the piezoelectric element 106. The ultrasonic wall thickness measurement system 20 further includes in-situ temperature measurement for accurate thickness compensation using the temperature sensor 28. The ultrasonic wall thickness measurement system 20/ultrasonic transducer 100 allows for simple removal from the structural asset 32 such that the ultrasonic wall thickness measurement system 20/ultrasonic transducer 100 can be repaired (e.g., easy removal/replacement of the third foil 124) or replaced as desired.

While upper and lower rings 120, 122 are provided herein, only one of the rings may be provided with the third foil 124 attached thereto.

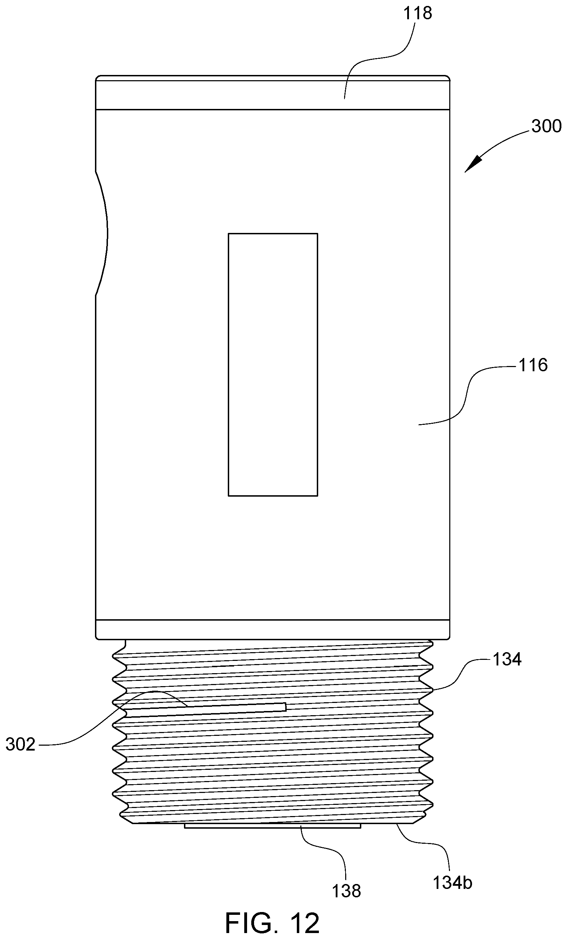

An alternative embodiment of the ultrasonic transducer 300 is illustrated in FIG. 12. The ultrasonic transducer 300 is identical to the ultrasonic transducer 100, except that the ultrasonic transducer 300 has a notch 302 provided in the portion of the body 134 below the flange 136 of the delay 102 at a predefined position relative to the lower end 134b thereof and below the flange 136. The notch 302 provides for a clear interface for the ultrasonic signal to be reflected; a physical mark that labels a predefined distance from the notch 302 to the lower end 134b of the body 134. The notch 302 provides for additional thickness measurement besides the end reflection (at the lower end 134b) of the delay 102. These two consistent thickness measurements are used to fulfill a two-step calibration for the ultrasonic wall thickness measurement system 20 required by the industrial standards, without the need to use a separate calibration block. Furthermore, extra site visits are also not required for system calibration purposes, thus benefitting the asset owner from both a safety perspective and a cost-saving perspective.

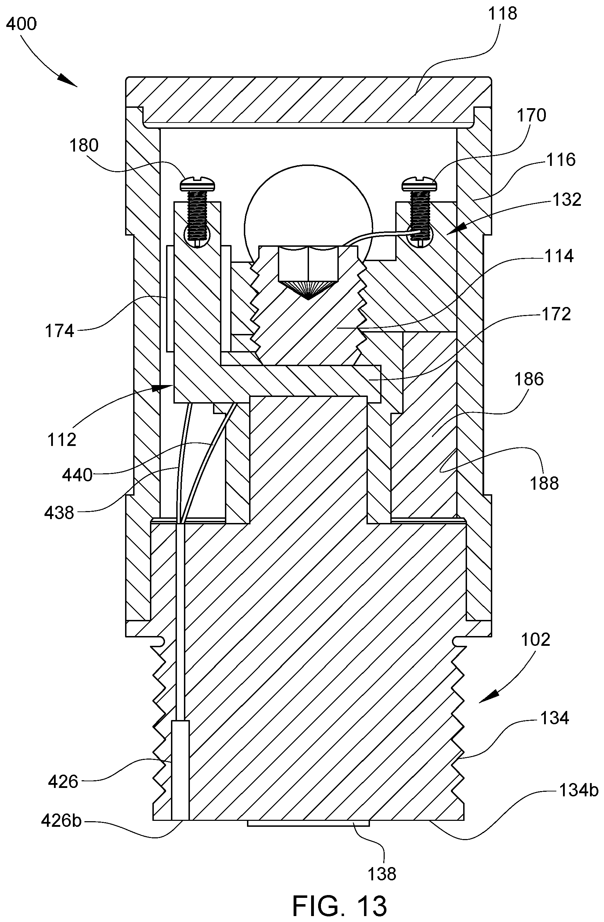

Another alternative embodiment of the ultrasonic transducer 400 is illustrated in FIG. 13. The ultrasonic transducer 400 is identical to the ultrasonic transducer 100, except that the ultrasonic transducer 400 is configured to have a temperature sensor 426, for example a resistance temperature detector ("RTD"), integrated therein (as opposed to working with a closely positioned temperature sensor 28 as previously described and illustrated in FIGS. 1 and 2). The temperature sensor 426 is preferably integrated in the delay 102 such that a lower end 462b of the temperature sensor 426 is exposed at the lower end 134b of the body 134 of the delay 102 and such that the lower end 426b of the temperature sensor 426 is positioned against the third foil 124 (not shown in FIG. 13). The temperature sensor 426 further has first and second wires 438, 440 extending outwardly from an opposite end and into the passageway 186 of the housing 116. The first and second wires 438, 440, like the first and second wires 38, 40 of the first cable assembly 26, are secured to the delay 102 and to the electrode 112, respectively, thereby establishing a connection from the temperature sensor 426 to each of the delay 102 and to the electrode 112.

While particular embodiments are illustrated in and described with respect to the drawings, it is envisioned that those skilled in the art may devise various modifications without departing from the appended claims. It will therefore be appreciated that the disclosure and the appended claims is not limited to the specific embodiments illustrated in and discussed with respect to the drawings and that modifications and other embodiments are intended to be included within the disclosure and appended drawings. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the disclosure and the appended claims. Further, the foregoing descriptions describe methods that recite the performance of several steps. Unless stated to the contrary, one or more steps within a method may not be required, one or more steps may be performed in a different order than as described, and one or more steps may be formed substantially contemporaneously.

## Claims

1. An ultrasonic transducer for high temperature application comprising:
a first modular assembly including a first foil (104), a piezoelectric element (106), a second foil (108), a backing (110), and an electrode (112) provided in a stacked configuration; and
a second modular assembly including a delay (102) and a coupling member (114) rotatably coupled to an upper end of the delay (102), wherein the first modular assembly is configured to be positioned within an opening (154) of the delay (102) and the coupling member (114) is configured to be rotated into engagement with an upper end of the first modular assembly to secure the first and second modular assemblies together.

2. The ultrasonic transducer of claim 1, wherein a first piezoelectric element (106) configured to operate at a temperature exceeding 150° Celsius is provided in a first configuration of the first modular assembly, and a second piezoelectric element configured to operate at a temperature exceeding 150° Celsius is provided in a second configuration of the first modular assembly, the first and second piezoelectric elements being configured to operate at different temperatures.

3. The ultrasonic transducer of claim 1, further comprising a third modular assembly including a third foil (124) and upper and lower rings (120, 122) rotatably coupled to the lower end of the delay (102) and supporting the third foil (124) and/or the delay (102) has a stepped portion (138) at a lower end thereof, and the third foil (124) engages with the stepped portion (138).

4. The ultrasonic transducer of claim 3, further comprising a resistance temperature detector (28) mounted in the delay (102) and in contact with the third foil (124) and/or in combination with an ID board assembly (24), a first cable assembly (26) coupling the electrode (112) and the delay (102) to the ID board assembly (24), and wires coupling the resistance temperature detector (28) to the electrode (112) and to the delay (102).

5. The ultrasonic transducer of claim 1, further comprising a resistance temperature detector mounted in the delay and/or in combination with an ID board assembly (24), a first cable assembly (26) coupling the electrode (112) and the delay (102) to the ID board assembly (24), and wires coupling the resistance temperature detector (28) to the electrode (102) and to the delay (102).

6. The ultrasonic transducer of claim 1, further comprising
a third modular assembly including a housing (116) having a passageway (186) and a cap (118) configured to be secured to an upper end of the housing (116) to close an upper end of the passageway (186), wherein the first modular assembly is configured to seat within the passageway (186) of the housing (116), and the second modular assembly is configured to seat partially within the passageway (186) of the housing (116) and extend out from a lower end of the passageway (186) and/or in combination with a mounting assembly (22) configured to couple the ultrasonic transducer (100) to a structural element and/or further comprising a fourth modular assembly including upper and lower rings (120, 122) rotatably coupled to the lower end of the delay (102) and supporting a third foil (124).

7. The ultrasonic transducer of claim 6, further comprises a mounting assembly (22) configured to couple the ultrasonic transducer (100) to a structural element, the mounting assembly (22) including a lower housing (42) in which the rings (120, 122) are positioned, and an upper housing (44) engaged against an upper surface of one of the rings (120, 122), the upper housing (44) being movable relative to the lower housing (42) to move the ultrasonic transducer (100) relative to the lower housing (42).

8. The combination of claim 7, further comprising at least one strap (48) coupled to the lower housing (42) and/or further comprising a resistance temperature detector (28) mounted in the lower housing (42) or mounted in the delay (102) and/or an ID board assembly (24), and a cable assembly (26) coupling the resistance temperature detector (28) to the ID board assembly (24) and/or wires coupling the resistance temperature detector (28) to the electrode (112) and to the delay (102).

9. The ultrasonic transducer according to claim 1, further comprising:
a ring (120) rotatably coupled to a lower end of the delay (102);
a third foil (124) coupled to the ring (120); and
a resistance temperature detector (28) mounted in the delay (102) and in contact with the third foil (124).

10. The ultrasonic transducer of claim 9, wherein the piezoelectric element (106) is configured to operate at a temperature exceeding 150° Celsius and/or the coupling member (114) is rotatably coupled to an upper end of the delay (102) and/or the delay (102) has a stepped portion (138) at a lower end thereof, and the third foil (124) engages with the stepped portion (138).

11. The ultrasonic transducer of claim 9, further comprising
a housing (116) in which the delay (102) is partially seated; and
a cap (118) configured to be secured to an upper end of the housing (116); and/or the ring is a lower ring (122), and further comprising an upper ring (120), the upper ring (120) being rotatable to sandwich a portion of the third foil (124) between the upper ring (120) and the lower ring (122).

12. The ultrasonic transducer of claim 11, in combination with a mounting assembly (22) configured to couple the ultrasonic transducer (100) to a structural element, the mounting assembly (22) including a lower housing (42) in which the ring (120, 122) is positioned, and an upper housing (44) engaged against an upper surface of the ring (120, 122), the upper housing (44) being movable relative to the lower housing (42) to move the ultrasonic transducer (100) relative to the lower housing (42).

13. A method of assembling an ultrasonic transducer comprising:
stacking a first foil (104), a piezoelectric element (106), a second foil (108), a backing (110), and an electrode (112) into a stacked configuration to form a modular assembly;
inserting the modular assembly into a delay (102);
engaging a coupling member (114) with an upper end of the delay (102); and
rotating the coupling member (114) to engage the coupling member (114) with an upper end of the modular assembly.

14. The method of claim 13, further comprising
electrically coupling a cable assembly (26) to the electrode (112) and to the delay (102) and/or
further comprising
inserting the modular assembly, delay (102) and coupling member (114) into a housing (116);
electrically coupling a cable assembly (26) to the electrode (112) and to the delay (102); and
seating a cap (118) on an open end of the housing (116).

15. The method according to claim 13, further comprising:
engaging the coupling member (114) with an upper end of the delay (102) to form a coupled first assembly;
rotating the coupling member (114) to engage the coupling member (114) with an upper end of the coupled first assembly;
inserting the coupled first assembly, delay (102) and coupling member (114) into a housing (116);
electrically coupling a cable assembly (26) to the electrode (112) and to the delay (102);
seating a cap (118) on an open end of the housing (116);
inserting the delay (102) into an upper housing (44) of a mounting assembly;
attaching a ring (120, 122) supporting a foil (124) to a lower end of the delay (102) below the upper housing (44) of the mounting assembly to form a second assembly;
inserting the second assembly into a lower housing (42) of the mounting assembly;
engaging second coupling members with the upper and lower housings (42, 44) of the mounting assembly; and
activating the second coupling members to move the upper housing (44) of the mounting assembly and the second assembly relative to the lower housing (42) of the mounting assembly.

## Patentansprüche

1. Ultraschallwandler für Hochtemperaturanwendungen, umfassend:
eine erste modulare Baugruppe, die eine erste Folie (104), ein piezoelektrisches Element (106), eine zweite Folie (108), eine Rückwand (110) und eine Elektrode (112) in einer gestapelten Konfiguration einschließt, und
eine zweite modulare Baugruppe, einschließlich einer Verzögerung (102) und eines Kopplungselements (114), das drehbar mit einem oberen Ende der Verzögerung (102) gekoppelt ist, wobei die erste modulare Baugruppe konfiguriert ist, um innerhalb einer Öffnung (154) der Verzögerung (102) positioniert zu werden, und das Kopplungselement (114) konfiguriert ist, um in Eingriff mit einem oberen Ende der ersten modularen Baugruppe gedreht zu werden, um die erste und die zweite modulare Baugruppe miteinander zu sichern.

2. Ultraschallwandler nach Anspruch 1, wobei ein erstes piezoelektrisches Element (106), das konfiguriert ist, um bei einer Temperatur von über 150° Celsius zu arbeiten, in einer ersten Konfiguration der ersten modularen Baugruppe bereitgestellt ist, und ein zweites piezoelektrisches Element, das konfiguriert ist, um bei einer Temperatur von über 150° Celsius zu arbeiten, in einer zweiten Konfiguration der ersten modularen Baugruppe bereitgestellt ist, wobei das erste und das zweite piezoelektrische Element konfiguriert sind, um bei unterschiedlichen Temperaturen zu arbeiten.

3. Ultraschallwandler nach Anspruch 1, ferner umfassend eine dritte modulare Baugruppe, einschließlich einer dritten Folie (124) und eines oberen und unteren Rings (120, 122), die drehbar mit dem unteren Ende der Verzögerung (102) gekoppelt sind und die dritte Folie (124) und/oder die Verzögerung (102) tragen, an ihrem unteren Ende einen abgestuften Abschnitt (138) aufweist und die dritte Folie (124) in den abgestuften Abschnitt (138) eingreift.

4. Ultraschallwandler nach Anspruch 3, ferner umfassend einen Widerstandstemperaturdetektor (28), der in der Verzögerung (102) montiert ist und in Kontakt mit der dritten Folie (124) und/oder in Kombination mit einer Informationsdisplaybaugruppe (24) steht, eine erste Kabelbaugruppe (26), welche die Elektrode (112) und die Verzögerung (102) mit der Informationsdisplaybaugruppe (24) koppelt, und Drähte, die den Widerstandstemperaturdetektor (28) mit der Elektrode (112) und der Verzögerung (102) koppeln.

5. Ultraschallwandler nach Anspruch 1, ferner umfassend einen Widerstandstemperaturdetektor, der in der Verzögerung und/oder in Kombination mit einer Informationsdisplaybaugruppe (24) montiert ist, eine erste Kabelbaugruppe (26), welche die Elektrode (112) und die Verzögerung (102) mit der Informationsdisplaybaugruppe (24) koppelt, und Drähte, die den Widerstandstemperaturdetektor (28) mit der Elektrode (102) und der Verzögerung (102) koppeln.

6. Ultraschallwandler nach Anspruch 1, ferner umfassend eine dritte modulare Baugruppe, einschließlich eines Gehäuses (116) mit einem Durchgang (186) und einer Kappe (118), die konfiguriert ist, um an einem oberen Ende des Gehäuses (116) gesichert zu werden, um ein oberes Ende des Durchgangs (186) zu schließen, wobei die erste modulare Baugruppe konfiguriert ist, um in dem Durchgang (186) des Gehäuses (116) zu sitzen, und die zweite modulare Baugruppe konfiguriert ist, um teilweise in dem Durchgang (186) des Gehäuses (116) zu sitzen und sich aus einem unteren Ende des Durchgangs (186) heraus zu erstrecken, und/oder in Kombination mit einer Montagebaugruppe (22), die konfiguriert ist, um den Ultraschallwandler (100) mit einem Strukturelement zu koppeln, und/oder ferner umfassend eine vierte modulare Baugruppe, einschließlich oberer und unterer Ringe (120, 122), die drehbar mit dem unteren Ende der Verzögerung (102) gekoppelt sind und eine dritte Folie (124) tragen.

7. Ultraschallwandler nach Anspruch 6, ferner umfassend eine Montagebaugruppe (22), die konfiguriert ist, um den Ultraschallwandler (100) mit einem Strukturelement zu koppeln, wobei die Montagebaugruppe (22) ein unteres Gehäuse (42), in dem die Ringe (120, 122) positioniert sind, und ein oberes Gehäuse (44) einschließt, das in eine obere Oberfläche eines der Ringe (120, 122) eingreift, wobei das obere Gehäuse (44) relativ zum unteren Gehäuse (42) beweglich ist, um den Ultraschallwandler (100) relativ zum unteren Gehäuse (42) zu bewegen.

8. Kombination nach Anspruch 7, ferner umfassend mindestens ein Band (48), das mit dem unteren Gehäuse (42) gekoppelt ist und/oder ferner umfassend einen Widerstandstemperaturdetektor (28), der in dem unteren Gehäuse (42) montiert ist oder in der Verzögerung (102) montiert ist, und/oder eine Informationsdisplaybaugruppe (24), und eine Kabelbaugruppe (26), die den Widerstandstemperaturdetektor (28) mit der Informationsdisplaybaugruppe (24) koppelt, und/oder Drähte, die den Widerstandstemperaturdetektor (28) mit der Elektrode (112) und mit der Verzögerung (102) koppeln.

9. Ultraschallwandler nach Anspruch 1, ferner umfassend:
einen Ring (120), der drehbar mit einem unteren Ende der Verzögerung (102) gekoppelt ist;
eine dritte Folie (124), die mit dem Ring (120) gekoppelt ist; und
einen Widerstandstemperaturdetektor (28), der in der Verzögerung (102) montiert ist und in Kontakt mit der dritten Folie (124) steht.

10. Ultraschallwandler nach Anspruch 9, wobei das piezoelektrische Element (106) konfiguriert ist, um bei einer Temperatur von mehr als 150° Celsius zu arbeiten, und/oder das Kopplungselement (114) drehbar mit einem oberen Ende der Verzögerung (102) gekoppelt ist und/oder die Verzögerung (102) einen abgestuften Abschnitt (138) an einem unteren Ende davon aufweist, und die dritte Folie (124) in den abgestuften Abschnitt (138) eingreift.

11. Ultraschallwandler von Anspruch 9, ferner umfassend
ein Gehäuse (116), in dem die Verzögerung (102) teilweise sitzt; und
eine Kappe (118), die konfiguriert ist, um an einem oberen Ende des Gehäuses (116) gesichert zu werden; und/oder der Ring ist ein unterer Ring (122), und ferner umfassend einen oberen Ring (120), wobei der obere Ring (120) drehbar ist, um einen Abschnitt der dritten Folie (124) zwischen dem oberen Ring (120) und dem unteren Ring (122) einzuklemmen.

12. Ultraschallwandler nach Anspruch 11 in Kombination mit einer Montagebaugruppe (22), die konfiguriert ist, um den Ultraschallwandler (100) mit einem Strukturelement zu koppeln, wobei die Montagebaugruppe (22) ein unteres Gehäuse (42), in dem der Ring (120, 122) positioniert ist, und ein oberes Gehäuse (44) einschließt, das in eine obere Oberfläche des Rings (120, 122) eingreift, wobei das obere Gehäuse (44) relativ zu dem unteren Gehäuse (42) beweglich ist, um den Ultraschallwandler (100) relativ zu dem unteren Gehäuse (42) zu bewegen.

13. Verfahren zum Zusammenbauen eines Ultraschallwandlers, umfassend:
Stapeln einer ersten Folie (104), eines piezoelektrischen Elements (106), einer zweiten Folie (108), eines Trägers (110) und einer Elektrode (112) in eine gestapelte Konfiguration, um eine modulare Baugruppe zu bilden;
Einsetzen der modularen Baugruppe in eine Verzögerung (102);
Eingreifen eines Kopplungselements (114) in ein oberes Ende der Verzögerung (102); und
Drehen des Kopplungselements (114), um das Kopplungselement (114) mit einem oberen Ende der modularen Baugruppe in Eingriff zu bringen.

14. Verfahren nach Anspruch 13, ferner umfassend
elektrisches Koppeln einer Kabelbaugruppe (26) mit der Elektrode (112) und mit der Verzögerung (102) und/oder
ferner umfassend
Einsetzen der modularen Baugruppe, der Verzögerung (102) und des Kopplungselements (114) in ein Gehäuse (116);
elektrisches Koppeln einer Kabelbaugruppe (26) mit der Elektrode (112) und mit der Verzögerung (102); und
Aufsetzen einer Kappe (118) auf ein offenes Ende des Gehäuses (116).

15. Verfahren nach Anspruch 13, ferner umfassend:
Eingreifen des Kopplungselements (114) in ein oberes Ende der Verzögerung (102), um eine gekoppelte erste Baugruppe zu bilden;
Drehen des Kopplungselements (114), um das Kopplungselement (114) mit einem oberen Ende der gekoppelten ersten Baugruppe in Eingriff zu bringen;
Einsetzen der gekoppelten ersten Baugruppe, der Verzögerung (102) und des Kopplungselements (114) in ein Gehäuse (116);
elektrisches Koppeln einer Kabelbaugruppe (26) mit der Elektrode (112) und mit der Verzögerung (102);
Aufsetzen einer Kappe (118) auf ein offenes Ende des Gehäuses (116);
Einsetzen der Verzögerung (102) in ein oberes Gehäuse (44) einer Montagebaugruppe;
Anbringen eines Rings (120, 122), der eine Folie (124) trägt, an einem unteren Ende der Verzögerung (102) unter dem oberen Gehäuse (44) der Montagebaugruppe, um eine zweite Baugruppe zu bilden;
Einsetzen der zweiten Baugruppe in ein unteres Gehäuse (42) der Montagebaugruppe;
Eingreifen der zweiten Kopplungselemente in das obere und untere Gehäuse (42, 44) der Montagebaugruppe; und
Aktivieren der zweiten Kopplungselemente, um das obere Gehäuse (44) der Montagebaugruppe und die zweite Baugruppe relativ zu dem unteren Gehäuse (42) der Montagebaugruppe zu bewegen.

## Revendications

1. Transducteur à ultrasons pour des applications à haute température comprenant :
un premier assemblage modulaire comportant une première feuille (104), un élément piézoélectrique (106), une seconde feuille (108), un renfort (110) et une électrode (112) disposés selon une configuration empilée ; et
un second assemblage modulaire comportant un retardateur (102) et un organe de couplage (114) couplé de manière rotative à une extrémité supérieure du retardateur (102), dans lequel le premier assemblage modulaire est configuré pour être positionné dans une ouverture (154) du retardateur (102) et l'organe de couplage (114) est configuré pour être tourné en engagement avec une extrémité supérieure du premier assemblage modulaire afin de fixer les premier et second assemblages modulaires l'un à l'autre.

2. Transducteur à ultrasons selon la revendication 1, dans lequel un premier élément piézoélectrique (106) configuré pour fonctionner à une température au-dessus de 150° Celsius est disposé dans une première configuration du premier assemblage modulaire, et un second élément piézoélectrique configuré pour fonctionner à une température au-dessus de 150° Celsius est disposé dans une seconde configuration du premier assemblage modulaire, les premier et second éléments piézoélectriques étant configurés pour fonctionner à des températures différentes.

3. Transducteur à ultrasons selon la revendication 1, comprenant en outre un troisième assemblage modulaire comportant une troisième feuille (124) et des anneaux supérieur et inférieur (120, 122) couplés de manière rotative à l'extrémité inférieure du retardateur (102) et supportant la troisième feuille (124) et/ou le retardateur (102) présente une partie étagée (138) au niveau d'une extrémité inférieure de celui-ci, et la troisième feuille (124) vient en prise avec la partie étagée (138).

4. Transducteur à ultrasons selon la revendication 3, comprenant en outre un thermomètre à résistance (28) monté dans le retardateur (102) et en contact avec la troisième feuille (124) et/ou en combinaison avec un ensemble carte d'identification (24), un premier ensemble de câbles (26) couplant l'électrode (112) et le retardateur (102) à l'ensemble carte d'identification (24), et des fils couplant le thermomètre à résistance (28) à l'électrode (112) et au retardateur (102).

5. Transducteur à ultrasons selon la revendication 1, comprenant en outre un thermomètre à résistance monté dans le retardateur et/ou en combinaison avec un ensemble carte d'identification (24), un premier ensemble de câbles (26) couplant l'électrode (112) et le retardateur (102) à l'ensemble carte d'identification (24), et des fils couplant le thermomètre à résistance (28) à l'électrode (102) et au retardateur (102).

6. Transducteur à ultrasons selon la revendication 1, comprenant en outre un troisième assemblage modulaire comprenant un logement (116) présentant un passage (186) et un capuchon (118) conçu pour être fixé à une extrémité supérieure du logement (116) pour fermer une extrémité supérieure du passage (186), dans lequel le premier assemblage modulaire est configuré pour se loger dans le passage (186) du logement (116), et le second assemblage modulaire est configuré pour se loger partiellement dans le passage (186) du logement (116) et s'étendre vers l'extérieur à partir d'une extrémité inférieure du passage (186) et/ou en combinaison avec un assemblage de montage (22) configuré pour coupler le transducteur à ultrasons (100) à un élément structurel et/ou comprenant en outre un quatrième assemblage modulaire comprenant des anneaux supérieurs et inférieurs (120, 122) couplés de manière rotative à l'extrémité inférieure du retardateur (102) et supportant une troisième feuille (124).

7. Transducteur à ultrasons selon la revendication 6, comprenant en outre un assemblage de montage (22) configuré pour coupler le transducteur à ultrasons (100) à un élément structurel, l'assemblage de montage (22) comportant un logement inférieur (42) dans lequel les anneaux (120, 122) sont positionnés, et un logement supérieur (44) mis en prise contre une surface supérieure de l'un des anneaux (120, 122), le logement supérieur (44) étant mobile par rapport au logement inférieur (42) pour déplacer le transducteur à ultrasons (100) par rapport au logement inférieur (42).

8. Combinaison selon la revendication 7, comprenant en outre au moins une sangle (48) couplée au logement inférieur (42) et/ou comprenant en outre un thermomètre à résistance (28) monté dans le logement inférieur (42) ou monté dans le retardateur (102) et/ou un ensemble carte d'identification (24), et un ensemble de câbles (26) couplant le thermomètre à résistance (28) à l'ensemble carte d'identification (24) et/ou des fils couplant le thermomètre à résistance (28) à l'électrode (112) et au retardateur (102).

9. Transducteur à ultrasons selon la revendication 1, comprenant en outre :
un anneau (120) couplé de manière rotative à une extrémité inférieure du retardateur (102) ;
une troisième feuille (124) couplée à l'anneau (120) ; et
un thermomètre à résistance (28) monté dans le retardateur (102) et en contact avec la troisième feuille (124).

10. Transducteur à ultrasons selon la revendication 9, dans lequel l'élément piézoélectrique (106) est configuré pour fonctionner à une température au-dessus de 150° Celsius et/ou l'organe de couplage (114) est couplé de manière rotative à une extrémité supérieure du retardateur (102) et/ou le retardateur (102) présente une partie étagée (138) à une extrémité inférieure de celui-ci, et la troisième feuille (124) vient en prise avec la partie étagée (138).

11. Transducteur à ultrasons selon la revendication 9, comprenant en outre
un logement (116) dans lequel le retardateur (102) est partiellement installé ; et
un capuchon (118) conçu pour être fixé à une extrémité supérieure du logement (116) ; et/ou l'anneau est un anneau inférieur (122), et comprenant en outre un anneau supérieur (120), l'anneau supérieur (120) étant rotatif pour prendre en sandwich une partie de la troisième feuille (124) entre l'anneau supérieur (120) et l'anneau inférieur (122).

12. Transducteur à ultrasons selon la revendication 11, en combinaison avec un assemblage de montage (22) configuré pour coupler le transducteur à ultrasons (100) à un élément structurel, l'assemblage de montage (22) comportant un logement inférieur (42) dans lequel l'anneau (120, 122) est positionné, et un logement supérieur (44) mis en prise contre une surface supérieure de l'anneau (120, 122), le logement supérieur (44) étant mobile par rapport au logement inférieur (42) afin de déplacer le transducteur à ultrasons (100) par rapport au logement inférieur (42).

13. Procédé d'assemblage d'un transducteur à ultrasons comprenant :
l'empilement d'une première feuille (104), d'un élément piézoélectrique (106), d'une seconde feuille (108), d'un renfort (110) et d'une électrode (112) selon une configuration empilée pour former un assemblage modulaire ;
l'insertion de l'assemblage modulaire dans un retardateur (102) ;
la mise en prise d'un organe de couplage (114) avec une extrémité supérieure du retardateur (102) ; et
la rotation de l'organe de couplage (114) pour mettre en prise l'organe de couplage (114) avec une extrémité supérieure de l'assemblage modulaire.

14. Procédé selon la revendication 13, comprenant en outre
le couplage électrique d'un ensemble de câbles (26) à l'électrode (112) et au retardateur (102) et/ou
comprenant en outre
l'insertion de l'assemblage modulaire, du retardateur (102) et de l'organe de couplage (114) dans un logement (116) ;
le couplage électrique d'un ensemble de câbles (26) à l'électrode (112) et au retardateur (102) ; et
la mise en place d'un capuchon (118) sur une extrémité ouverte du logement (116).

15. Procédé selon la revendication 13, comprenant en outre :
la mise en prise de l'organe de couplage (114) avec une extrémité supérieure du retardateur (102) pour former un premier assemblage couplé ;
la rotation de l'organe de couplage (114) pour mettre en prise l'organe de couplage (114) avec une extrémité supérieure du premier assemblage couplé ;
l'insertion du premier assemblage couplé, du retardateur (102) et de l'organe de couplage (114) dans un logement (116) ;
le couplage électrique d'un ensemble de câbles (26) à l'électrode (112) et au retardateur (102) ;
la mise en place d'un capuchon (118) sur une extrémité ouverte du logement (116) ;
l'insertion du retardateur (102) dans un logement supérieur (44) d'un assemblage de montage ;
la fixation d'un anneau (120, 122) supportant une feuille (124) à une extrémité inférieure du retardateur (102) sous le logement supérieur (44) de l'assemblage de montage pour former un second assemblage ;
l'insertion du second assemblage dans un logement inférieur (42) de l'assemblage de montage ;
la mise en prise de seconds organes de couplage avec les logements supérieur et inférieur (42, 44) de l'assemblage de montage ; et
l'activation des seconds organes de couplage pour déplacer le logement supérieur (44) de l'assemblage de montage et le second assemblage par rapport au logement inférieur (42) de l'assemblage de montage.
